# EUROPEAN PATENT SPECIFICATION

(11) **EP 2 961 128 B1**
(45) Date of publication and mention of the grant of the patent: **07.08.2019**
(21) Application number: 15170533.2
(22) Date of filing: 03.06.2015
(51) Int. Cl.: H04L 29/06, H04W 12/04

(54) **METHOD, SYSTEM, COMPUTER PROGRAM AND COMPUTER PROGRAM PRODUCT FOR BINDING A TOKEN KEY TO AN ACCOUNT**
VERFAHREN, SYSTEM, COMPUTERPROGRAMM UND COMPUTERPROGRAMMPRODUKT ZUR BINDUNG EINES TOKEN-SCHLÜSSELS AN EIN KONTO
PROCÉDÉ, SYSTÈM, PROGRAMME INFORMATIQUE ET PRODUIT DE PROGRAMME INFORMATIQUE PERMETTANT DE RELIER UNE CLÉ DE JETON D'AUTHENTIFICATION À UN COMPTE

(30) Priority: 26.06.2014 CN 201410299506
(43) Date of publication of application: 30.12.2015
(73) Proprietor: Xiaomi Inc., Beijing 100085 (CN)
(72) Inventor: Zhang, Jun, Beijing Beijing 100085 (CN); Li, Shen, Beijing Beijing 100085 (CN); Wu, Tingbin, Beijing Beijing 100085 (CN)
(74) Representative: Sackin, Robert

(56) References cited:
- EP-A1- 2 696 557
- WO-A2-2008/011143
- US-A1- 2009 271 847
- US-A1- 2010 083 363

## Description

### TECHNICAL FIELD

The present disclosure relates to a field of network security technology, and more particularly to a method and a system for binding a token key to an account.

### BACKGROUND

With the development of Internet technology, the resources provided by a website are getting richer and richer, some websites may provide free mailbox, some websites may provide instant messaging, some websites may provide videos, and the like. If a user uses these resources, he/she needs to register an account and set a password on a webpage, and after successful registration, uses the account and the password on the webpage to login in, so as to use the resources of the website.

In order to improve the security of the account, a security authentication method is introduced in many websites, in which during the process of account login, a security token may also be used in addition to using a password. The security token is an application installed in a mobile terminal. It is only required for a user to bind a token key of an account assigned by a server to the account, so that the token key may be used in the subsequent login, thereby improving the security of the account.

European patent application with publication no. EP 2696557 discloses a system and a method for accessing third-party applications based on a cloud platform. The method includes searching a stored binding information mapping table according to a third party application selected by the user to obtain access information corresponding to the cloud platform account information.

United States patent application with publication no. US 2009/0271847 discloses an apparatus configured to receive a request for an access token from a remote entity, wherein the request includes an indication of a requested service.

United States patent application with publication no. US 2010/0083363 discloses a method for associating a networked device with an online service in which a claim token is received from the service over the network.

International patent application with publication no. WO 2008/011143 discloses a system for mobile device service authorization that uses separate links to perform service authorization.

### SUMMARY

In order to overcome the problems in the related art, the present disclosure provides a method and an apparatus of binding a token key to an account.

Aspects of the invention are defined in the independent claims below to which reference should now be made. Optional features are set-out in the dependent claims.

The technical solutions provided by the embodiments of the present disclosure may include: sending a binding request message carrying an account to a server by a webpage side, so that the server generates a certification link and a first token key corresponding to the account; acquiring the certification link and the first token key, and generating display information according to the certification link and the first token key, so that a mobile terminal obtains encrypted information according to the first token key, and sends an access request message carrying the certification link and the encrypted information, and further so that the server receives the access request message, and sends the encrypted information; acquiring the encrypted information, and obtaining a second token key according to the encrypted information; and sending a binding success message to the server after determining the second token key is consistent with the first token key, so that the server binds the first token key to the account. Advantageously, it may be seen, during the process of binding the token key to the account, the mobile terminal acquires the display information, then generates the encrypted information according to the first token key in the display information, and performs the subsequent processes. During the whole process, the user does not need to backfill token information again, thus reducing tedious degree of user operation, and improving user's experience.

It is to be understood that both the foregoing general description and the following detailed description are exemplary and explanatory only and are not restrictive of the present disclosure.

### BRIEF DESCRIPTION OF THE DRAWINGS

The accompanying drawings, which are hereby incorporated in and constitute a part of this specification, illustrate embodiments consistent with the present invention and, together with the description, serve to explain the principles of the present invention.
Fig. 1 is a flow chart of a method of binding a token key to an account used for a webpage side according to an exemplary embodiment.
Fig. 2 is a flow chart of a method of binding a token key to an account used for a server according to an exemplary embodiment.
Fig. 3 is a flow chart of a method of binding a token key to an account used for a mobile terminal according to an exemplary embodiment.
Fig. 4 is a flow chart of a method of binding a token key to an account according to an exemplary embodiment.
Fig. 5 is a block diagram of an apparatus of binding a token key to an account corresponding to Fig. 1 according to an exemplary embodiment.
Fig. 6 is a block diagram of an apparatus of binding a token key to an account corresponding to Fig. 2 according to an exemplary embodiment.
Fig. 7 is a block diagram of an apparatus an apparatus of binding a token key to an account according to an exemplary embodiment.
Fig. 8 is a block diagram of an apparatus of binding a token key to an account corresponding to Fig. 3 according to an exemplary embodiment.
Fig. 9 is a block diagram of a mobile terminal according to an exemplary embodiment.
Fig. 10 is a block diagram of a server according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

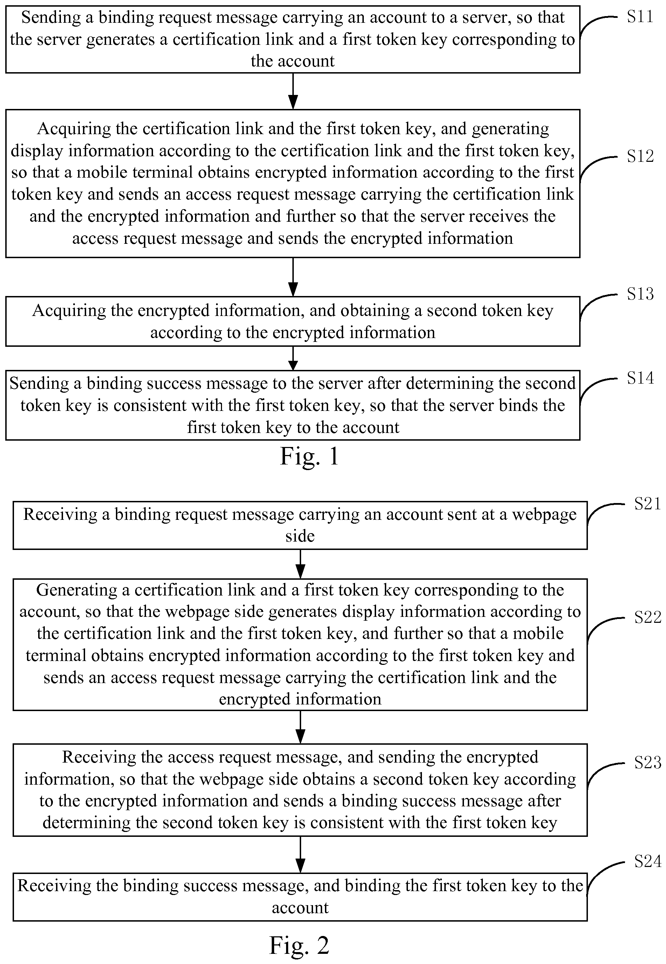

Fig. 1 is a flow chart of a method of binding a token key to an account according to an exemplary embodiment. As shown in Fig. 1, the method is implemented by a webpage at the webpage side or on a webpage hosting portion of a web server, comprising the following steps.

In step S11, a binding request message carrying an account is sent to a server by the webpage, so that the server generates a certification link and a first token key corresponding to the account.

If a user wants to bind the token key to the account, the user may download a security token in a mobile terminal firstly, and then issue the binding request message after logging in the account at the webpage, and the webpage sends the binding request message to the server, wherein the binding request message carries the account.

The server may generate the certification link and the first token key according to the account in the binding request message, the certification link may be a URL (Uniform Resource Locator), or the like.

In step S12, the certification link and the first token key is acquired, and display information is generated according to the certification link and the first token key, so that a mobile terminal obtains encrypted information according to the first token key, and sends an access request message carrying the certification link and the encrypted information, and further so that the server receives the access request message and sends the encrypted information.

After acquiring the certification link and the first token key generated by the server, the webpage may generate the display information according to the certification link and the first token key. After viewing the display information, the user may acquire the display information by using the mobile terminal. The manner for acquiring may be different according to the type of the display information. For example, if the display information is a two-dimensional code, it may be acquired by scanning the two-dimensional code using the mobile terminal; if the display information is a bar code, it may be acquired by scanning the bar code using the mobile terminal.

After acquiring the display information, the mobile terminal may obtain the encrypted information according to the first token key, and then send the access request message carrying the certification link and the encrypted information to the server. After receiving the access request message, the server may acquire the encrypted information carried in the access request message, and then send the encrypted information.

In step S13, the encrypted information is acquired, and a second token key is obtained according to the encrypted information.

After acquiring the encrypted information sent by the server, the webpage may obtain the second token key according to the encrypted information.

In step S14, a binding success message is sent to the server after it is determined that the second token key is consistent with the first token key, so that the server binds the first token key to the account.

It is judged whether the second token key is consistent with the first token key, and if yes, the binding success message is sent to the server. Then, the server may bind the first token key to the account. When subsequently logging in the account, the user may use password and the first token key saved in the mobile terminal at the same time, thereby realizing the better protection for the account. If the second token key is inconsistent with the first token key which may be occurred that the second token key has been replaced during the process of transmitting the encrypted information, in this case, a binding failed message is sent to the server and displayed. After seeing the message, the user may reissue the binding request message, and request for binding the token key to the account again.

It may be seen from the flow as shown in Fig. 1, during the process of binding the token key to the account, the mobile terminal acquires the display information, and then generate the encrypted information according to the first token key in the display information, and proceed with the subsequent processing. During the whole process, the user does not need to backfill token information again, thereby reducing tedious user operation, and improving the user's experience to give a good user experience.

The step of the generating the display information according to the certification link and the first token key in above described S12 comprises:

generating the display information according to the certification link, the first token key and the account, so that the mobile terminal obtains the encrypted information by performing a hash operation according to the first token key and the account, or obtains the encrypted information by performing the hash operation according to timestamp, the first token key and the account.

In order to ensure the security of transmitting the first token key in the Internet, the webpage may generate the display information according to the certification link, the first token key and the account. Thus, the mobile terminal may obtain the encrypted information by performing the hash operation according to the first token key and the account; or obtain the encrypted information by performing the hash operation according to the timestamp, the first token key and the account. Herein, the time stamp may be acquired from the mobile terminal.

Accordingly, after acquiring the encrypted information, the server forwards the encrypted information to the webpage, and the webpage may also use the hash operation to decode the encrypted information to obtain a second token key.

Fig. 2 is a flow chart of a method of binding a token key to an account according to an exemplary embodiment. As shown in Fig. 2, the method is used at the server, comprising the following steps.

In step S21, a binding request message carrying an account sent at a webpage is received.

In step S22, a certification link and a first token key corresponding to the account is generated, so that the webpage generates display information according to the certification link and the first token key, and further so that a mobile terminal obtains encrypted information according to the first token key and sends an access request message carrying the certification link and the encrypted information.

In step S23, the access request message is received, and the encrypted information is sent, so that the webpage obtains a second token key according to the encrypted information, and sends a binding success message after determining the second token key is consistent with the first token key.

In step S24, the binding success message is received, and the first token key is bonded to the account.

In order to ensure that the binding may be completed in time, the server may also establish a communication connection with the webpage. If the access request message sent by the mobile terminal is not received in a setting period, the communication connection with the webpage is released. It means that this binding is failed, and thus network resources may be released, thereby effectively avoiding the waste of the network resources.

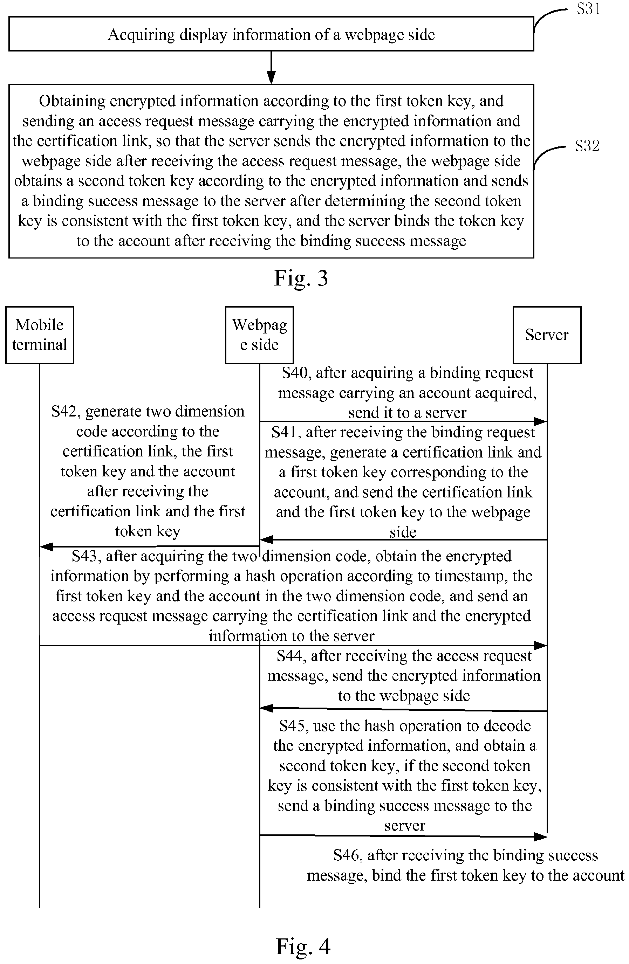

Fig. 3 is a flow chart of a method of binding a token key to an account according to an exemplary embodiment. As shown in Fig. 3, the method is used at the mobile terminal, comprising the following steps.

In step S31, display information of a webpage is acquired, the display information is generated by the webpage according to a certification link and a first token key generated by a server, and the certification link and the first token key is generated by the server according to an account carried in a binding request message sent at the webpage.

In step S32, encrypted information according to the first token key is obtained, and an access request message carrying the encrypted information and the certification link is sent, so that the server sends the encrypted information to the webpage after receiving the access request message, the webpage obtains a second token key according to the encrypted information, and sends a binding success message to the server after determining the second token key is consistent with the first token key, and the server binds the token key to the account after receiving the binding success message.

If the display information is generated by the webpage according to the certification link and the first token key generated by the server, the step of the obtaining the encrypted information according to the first token key in the above described step S32 comprises:
using the first token key as the encrypted information; or
obtaining the encrypted information by perform a hash operation according to timestamp and the first token key.

If the display information is generated by the webpage according to the certification link, the first token key and the account generated by the server, the step of the obtaining the encrypted information according to the first token key in the above described step S32 comprises:
obtaining the encrypted information by performing a hash operation according to the first token key and the account; or
obtaining the encrypted information by performing the hash operation according to timestamp, the first token key and the account.

Fig. 4 is a flow chart of a method of binding a token key to an account according to an exemplary embodiment. As shown in Fig. 4, the method is used in the system composed of a mobile terminal, a webpage and a server (the webpage may be implemented on the server or on a separate web server), comprising the steps of:
In step S40, the webpage sends a binding request message carrying an account to the server after acquiring the binding request message carrying an account.

In step S41, after receiving the binding request message, the server generates a certification link and a first token key corresponding to the account, and sends the certification link and the first token key to the webpage.

In step S42, after receiving the certification link and the first token key, the webpage generates two-dimensional code according to the certification link, the first token key and the account.

In step S43, the mobile terminal performs a hash operation according to a timestamp, the first token key and the account in the two-dimensional code after acquiring the two-dimensional code to obtain the encrypted information, and sends an access request message carrying the certification link and the encrypted information to the server.

In step S44, the server sends the encrypted information to the webpage after receiving the access request message.

In step S45, the webpage uses the hash operation to decode the encrypted information to obtain a second token key, and if the second token key is consistent with the first token key, sends a binding success message to the server.

In step S46, the server binds the first token key to the account after receiving the binding success message.

When a user subsequently logs in an account, the user may use the first token key and the password to log in, thereby effectively protecting the security of the account.

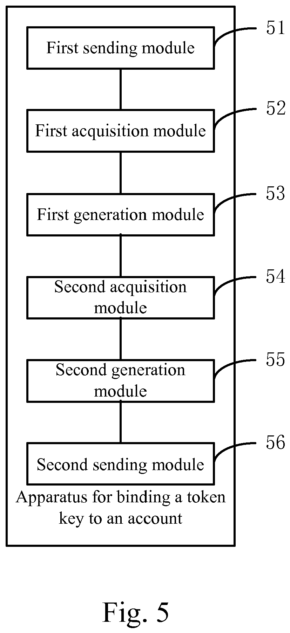

Fig. 5 is a block diagram of an apparatus of binding a token key to an account according to an exemplary embodiment, which implements the method as shown in Fig. 1. Referring to Fig. 5, the apparatus comprises a first sending module 51, a first acquisition module 52, a first generation module 53, a second acquisition module 54, a second generation module 55 and a second sending module 56.

The first sending module 51 is configured to send a binding request message carrying an account to a server, so that the server generates a certification link and a first token key corresponding to the account.

The first acquisition module 52 is configured to acquire the certification link and the first token key.

The first generation module 53 is configured to generate display information according to the certification link and the first token key, so that a mobile terminal obtains encrypted information according to the first token key and sends an access request message carrying the certification link and the encrypted information, and further so that the server receives the access request message and sends the encrypted information.

The second acquisition module 54 is configured to acquire the encrypted information.

The second generation module 55 is configured to obtain a second token key according to the encrypted information.

The second sending module 56 is configured to send a binding success message to the server after determining the second token key is consistent with the first token key, so that the server binds the first token key to the account.

The first generation module 53 comprises:
a generation unit configured to generate the display information according to the certification link, the first token key and the account, so that the mobile terminal obtains the encrypted information by performing a hash operation according to the first token key and the account, or obtains the encrypted information by performing the hash operation according to timestamp, the first token key and the account.

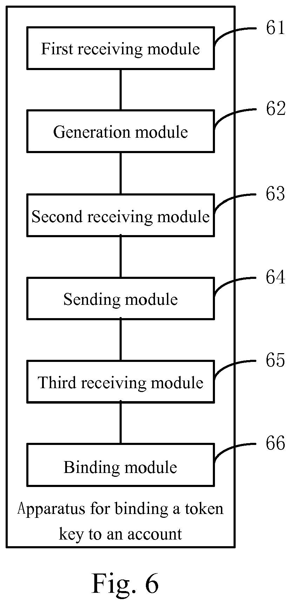

Fig. 6 is a block diagram of an apparatus of binding a token key to an account according to an exemplary embodiment, which implements the method as shown in Fig. 2. Referring to Fig. 6, the apparatus comprises a first receiving module 61, a generation module 62, a second receiving module 63, a sending module 64, a third receiving module 65 and a binding module 66.

The first receiving module 61 is configured to receive a binding request message carrying an account sent at a webpage.

The generation module 62 is configured to generate a certification link and a first token key corresponding to the account, so that the webpage generates display information according to the certification link and the first token key, and further so that a mobile terminal obtains encrypted information according to the first token key and sends an access request message carrying the certification link and the encrypted information.

The second receiving module 63 is configured to receive the access request message.

The sending module 64 is configured to send the encrypted information, so that the webpage obtains a second token key according to the encrypted information, and sends a binding success message after determining the second token key is consistent with the first token key.

The third receiving module 65 is configured to receive the binding success message.

The binding module 66 is configured to bind the first token key to the account.

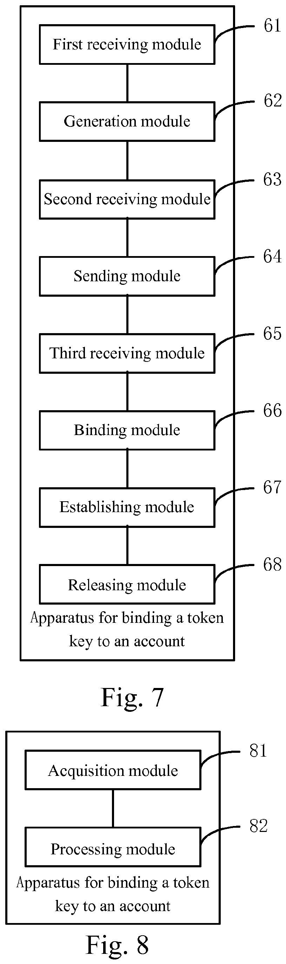

Fig. 7 is a block diagram of an apparatus of binding a token key to an account according to an exemplary embodiment, the apparatus further comprises an establishing module 67 and a releasing module 68 based on the apparatus as shown in Fig. 6.

The establishing module 67 is configured to establish a communication connection with the webpage.

The releasing module 68 is configured to release the communication connection with the webpage if the access request message sent by the mobile terminal is not received in a setting period.

Fig. 8 is a block diagram of an apparatus of binding a token key to an account according to an exemplary embodiment, the apparatus implements the method as shown in Fig. 3. Referring to Fig. 8, the apparatus comprises an acquisition module 81 and a processing module 82.

The acquisition module 81 is configured to acquire display information from a webpage which is generated by the webpage according to a certification link and a first token key generated by a server, the certification link and the first token key being generated by the server according to an account carried in a binding request message sent at the webpage.

The processing module 82 is configured to obtain encrypted information according to the first token key, and send an access request message carrying the encrypted information and the certification link, so that the server sends the encrypted information to the webpage after receiving the access request message, the webpage obtains a second token key according to the encrypted information and sends a binding success message to the server after determining the second token key is consistent with the first token key, and the server binds the first token key to the account after receiving the binding success message.

The processing module 82 comprises:
a first processing unit configured to use the first token key as the encrypted information; or
a second processing unit configured to obtain the encrypted information by performing a hash operation according to timestamp and the first token key .

If the display information is generated by the webpage according to the certification link, the first token key and the account generated by the server, the processing module 82 comprises:
a third processing unit configured to obtain the encrypted information by performing a hash operation according to the first token key and the account; or
a fourth processing unit configured to obtain the encrypted information by performing the hash operation according to timestamp, the first token key and the account.

With respect to the apparatuses in the above embodiments, the specific manners for performing operations for individual modules therein have been described in detail in the embodiments regarding the method of binding a token key to an account, which will not be elaborated herein.

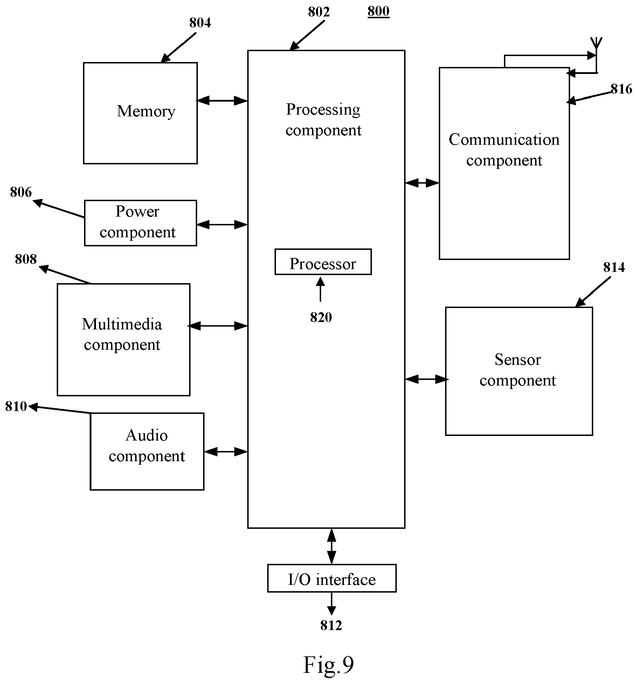

Fig. 9 is a block diagram of a device 800 of binding a token key to an account according to an exemplary embodiment. For example, the device 800 may be an electronic device or electronic terminal such as a mobile phone or mobile terminal, a computer or computer terminal, a digital broadcast terminal, a messaging device, a gaming console, a tablet, a medical device, exercise equipment, a personal digital assistant or the like.

Referring to Fig. 9, the device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the device 800, contact data, phonebook data, messages, pictures, videos, etc. The memory 804 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice identification mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keyboard, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 804, executable by the processor 820 in the device 800, for performing the above method. For example, the non-transitory computer-readable storage medium may be a ROM, a random access memory (RAM), a CD-ROM, a magnetic tape, a floppy disc, an optical data storage device, or the like.

A non-transitory computer readable storage medium, when instructions in the storage medium are executed by the processor of a webpage side, the webpage side may execute a method of binding a token key to an account, the method comprises:
sending a binding request message carrying an account to a server, so that the server generates a certification link and a first token key corresponding to the account;
acquiring the certification link and the first token key, and generating display information according to the certification link and the first token key, so that a mobile terminal obtains encrypted information according to the first token key and sends an access request message carrying the certification link and the encrypted information, and further so that the server receives the access request message and sends the encrypted information;
acquiring the encrypted information, and obtaining a second token key according to the encrypted information; and
sending a binding success message to the server after determining the second token key is consistent with the first token key, so that the server binds the first token key to the account.

A non-transitory computer readable storage medium, when instructions in the storage medium are executed by the processor of a mobile terminal, the mobile terminal may execute a method of binding a token key to an account, comprising:
acquiring display information of a webpage side generated by the webpage side according to a certification link and a first token key generated by a server, the certification link and the first token key being generated by the server according to an account carried in a binding request message sent at the webpage side; and
obtaining encrypted information according to the first token key, and sending an access request message carrying the encrypted information and the certification link, so that the server sends the encrypted information to the webpage side after receiving the access request message, the webpage side obtains a second token key according to the encrypted information, and sends a binding success message to the server after determining the second token key is consistent with the first token key, the server binds the token key to the account after receiving the binding success message.

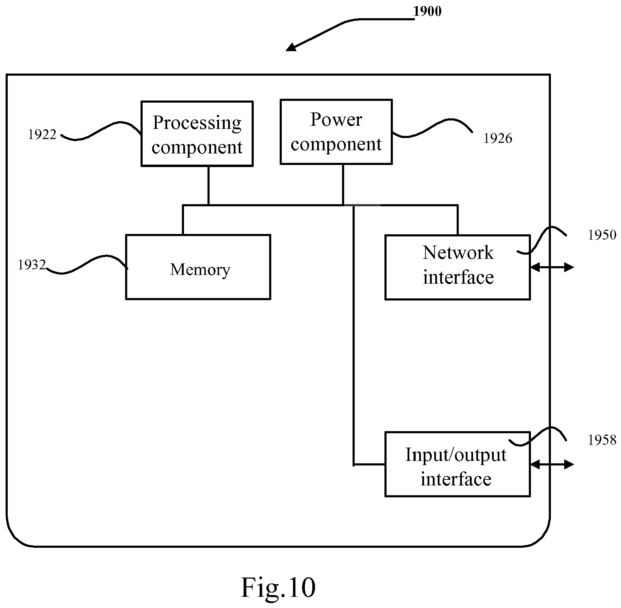

Fig. 10 is a block diagram of an apparatus 1900 of binding a token key to an account according to an exemplary embodiment. For example, the apparatus 1900 may be provided as a server. As shown in Fig. 10, the apparatus 1900 includes a processing component 1922 that further includes one or more processors, and memory resources represented by a memory 1932 for storing instructions, such as application programs, executable by the processing component 1922. The application programs stored in memory 1932 may include one or more modules, each of which corresponds to a set of instructions. Moreover, the processing component 1922 is configured to execute instructions for performing the above described method of binding a token key to an account, comprising:
receiving a binding request message carrying an account sent at a webpage side;
generating a certification link and a first token key corresponding to the account, so that the webpage side generates display information according to the certification link and the first token key, and further so that a mobile terminal obtains encrypted information according to the first token key and sends an access request message carrying the certification link and the encrypted information;
receiving the access request message, and sending the encrypted information, so that the webpage side obtains a second token key according to the encrypted information, and sends a binding success message after determining the second token key is consistent with the first token key; and
receiving the binding success message, and binding the first token key to the account.

The apparatus 1900 may also include a power component 1926 configured to perform power management of the apparatus 1900, wired or wireless network interface(s) 1950 configured to connect the apparatus 1900 to a network, and an input/output (I/O) interface 1958. The apparatus 1900 may operate based on an operating system stored in the memory 1932, such as Windows ServerTM, Mac OS XTM, UnixTM, LinuxTM, FreeBSDTM, or the like.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the real range of the present disclosure are defined by the following claims.

## Claims

1. A method of binding a token key to an account, the method comprising:
a webpage sending a binding request message carrying an account to a server, so that the server generates a certification link and a first token key corresponding to the account (S41);
the webpage acquiring the certification link and the first token key from the server, and generating and displaying display information according to the certification link and the first token key (S42), so that by scanning the displayed display information a mobile terminal obtains encrypted information according to the first token key and sends an access request message carrying the certification link and the encrypted information to the server (S43) and the server receiving the access request message and sending the encrypted information to the webpage (S44);
the webpage acquiring the encrypted information, and obtaining a second token key according to the encrypted information; and
the webpage sending a binding success message to the server after determining the second token key is consistent with the first token key (S45), and the server binding the first token key to the account (S46).

2. The method according to claim 1, **characterized in that**, the step of the generating the display information according to the certification link and the first token key comprises:
generating the display information according to the certification link, the first token key and the account, so that the mobile terminal obtains the encrypted information by performing a hash operation according to the first token key and the account, or obtains the encrypted information by performing a hash operation according to a timestamp, the first token key and the account.

3. A system for binding an account and a token key, the system comprising:
a webpage configured to send a binding request message carrying an account to a server, so that the server generates a certification link and a first token key corresponding to the account (S41);
the webpage being configured to acquire the certification link and the first token key from the server, and to generate and display display information according to the certification link and the first token key (S42), so that by scanning the displayed display information a mobile terminal obtains encrypted information according to the first token key and sends an access request message carrying the certification link and the encrypted information to the server (S43); the server being configured to receive the access request message and send the encrypted information to the webpage (S44);
the webpage being configured to acquire the encrypted information, and obtain a second token key according to the encrypted information; and
the webpage being configured to send a binding success message to the server after determining the second token key is consistent with the first token key (S45), and the server being configured to bind the first token key to the account (S46).

4. The system according to claim 3, wherein the:
mobile terminal is configured to obtain the encrypted information by performing a hash operation according to the first token key and the account, or to obtain the encrypted information by performing a hash operation according to a timestamp, the first token key and the account.

## Patentansprüche

1. Verfahren zum Binden eines Token-Schlüssels an ein Konto, wobei das Verfahren Folgendes aufweist:
durch eine Webseite Senden einer ein Konto tragenden Bindungsanforderungsnachricht an einen Server, so dass der Server einen Zertifizierungslink und einen ersten Token-Schlüssel, die dem Konto entsprechen, generiert (S41);
durch die Webseite Erfassen des Zertifizierungslinks und des ersten Token-Schlüssels von dem Server und Generieren und Anzeigen von Anzeigeinformationen gemäß dem Zertifizierungslink und dem ersten Token-Schlüssel (S42), so dass ein Mobil-Endgerät durch Scannen der angezeigten Anzeigeinformationen verschlüsselte Informationen gemäß dem ersten Token-Schlüssel erhält und eine den Zertifizierungslink und die verschlüsselten Nachrichten tragende Zugangsanforderungsnachricht an den Server sendet (S43), und
durch den Server Empfangen der Zugangsanforderungsnachricht und Senden der verschlüsselten Informationen an die Webseite (S44);
durch die Webseite Erfassen der verschlüsselten Informationen und Erhalten eines zweiten Token-Schlüssels gemäß den verschlüsselten Informationen; und
durch die Webseite Senden einer Bindungserfolgsnachricht an den Server nach Bestimmen, dass der zweite Token-Schlüssel mit dem ersten Token-Schlüssel übereinstimmt (S45), und durch den Server Binden des ersten Token-Schlüssels an das Konto (S46).

2. Verfahren nach Anspruch 1, **dadurch gekennzeichnet, dass** der Schritt des Generierens der Anzeigeinformationen gemäß des Zertifizierungslinks und dem ersten Token-Schlüssel Folgendes aufweist:
Generieren der Anzeigeinformationen gemäß dem Zertifizierungslink, dem ersten Token-Schlüssel und dem Konto, so dass das Mobil-Endgerät die verschlüsselten Informationen durch Durchführen einer Hash-Operation gemäß dem ersten Token-Schlüssel und dem Konto erhält oder die verschlüsselten Informationen durch Durchführen einer Hash-Operation gemäß einem Zeitstempel, dem ersten Token-Schlüssel und dem Konto erhält.

3. System zum Binden eines Kontos und eines Token-Schlüssels, das Folgendes aufweist:
eine Webseite, die angeordnet ist zum Senden einer ein Konto tragenden Bindungsanforderungsnachricht an einen Server, so dass der Server einen Zertifizierungslink und einen ersten Token-Schlüssel, die dem Konto entsprechen, generiert (S41);
wobei die Webseite zum Erfassen des Zertifizierungslinks und des ersten Token-Schlüssels von dem Server und zum Generieren und Anzeigen von Anzeigeinformationen gemäß dem Zertifizierungslink und dem ersten Token-Schlüssel (S42) angeordnet ist, so dass ein Mobil-Endgerät durch Scannen der angezeigten Anzeigeinformationen verschlüsselte Informationen gemäß dem ersten Token-Schlüssel erhält und eine den Zertifizierungslink und die verschlüsselten Nachrichten tragende Zugangsanforderungsnachricht an den Server sendet (S43); wobei der Server zum Empfangen der Zugangsanforderungsnachricht und Senden der verschlüsselten Informationen an die Webseite (S44) angeordnet ist;
wobei die Webseite zum Erfassen der verschlüsselten Informationen und Erhalten eines zweiten Token-Schlüssels gemäß den verschlüsselten Informationen angeordnet ist; und
wobei die Webseite zum Senden einer Bindungserfolgsnachricht an den Server nach Bestimmen, dass der zweite Token-Schlüssel mit dem ersten Token-Schlüssel übereinstimmt (S45), angeordnet ist und der Server zum Binden des ersten Token-Schlüssels an das Konto (S46) angeordnet ist.

4. System nach Anspruch 3, wobei:
das Mobil-Endgerät zum Erhalten der verschlüsselten Informationen durch Durchführen einer Hash-Operation gemäß dem ersten Token-Schlüssel und dem Konto oder zum Erhalten der verschlüsselten Informationen durch Durchführen einer Hash-Operation gemäß einem Zeitstempel, dem ersten Token-Schlüssel und dem Konto konfiguriert ist.

## Revendications

1. Procédé de liaison d'une clé de jeton d'authentification à un compte, le procédé comprenant :
l'envoi par une page Web d'un message de demande de liaison comportant un compte à un serveur, de telle sorte que le serveur génère un lien de certification et une première clé de jeton d'authentification correspondant au compte (S41) ;
l'acquisition par la page Web du lien de certification et de la première clé de jeton d'authentification en provenance du serveur, et la génération et l'affichage d'informations d'affichage conformément au lien de certification et à la première clé de jeton d'authentification (S42), de telle sorte que par balayage des informations d'affichage affichées un terminal mobile obtienne des informations cryptées conformément à la première clé de jeton d'authentification et envoie un message de demande d'accès comportant le lien de certification et les informations cryptées au serveur (S43) et la réception par le serveur du message de demande d'accès et l'envoi des informations cryptées à la page Web (S44) ;
l'acquisition par la page Web des informations cryptées, et l'obtention d'une seconde clé de jeton d'authentification conformément aux informations cryptées ; et
l'envoi par la page Web d'un message de liaison réussie au serveur après la détermination que la seconde clé de jeton d'authentification est cohérente avec la première clé de jeton d'authentification (S45), et la liaison par le serveur de la première clé de jeton d'authentification au compte (S46).

2. Procédé selon la revendication 1, **caractérisé en ce que** l'étape de génération des informations d'affichage conformément au lien de certification et à la première clé de jeton d'authentification comprend :
la génération des informations d'affichage conformément au lien de certification, à la première clé de jeton d'authentification et au compte, de telle sorte que le terminal mobile obtienne les informations cryptées en exécutant une opération de hachage conformément à la première clé de jeton d'authentification et au compte, ou obtienne les informations cryptées en exécutant une opération de hachage conformément à une estampille temporelle, à la première clé de jeton d'authentification et au compte.

3. Système de liaison d'un compte et d'une clé de jeton d'authentification, le système comprenant :
une page Web configurée pour envoyer un message de demande de liaison comportant un compte à un serveur, de telle sorte que le serveur génère un lien de certification et une première clé de jeton d'authentification correspondant au compte (S41) ;
la page Web étant configurée pour acquérir le lien de certification et la première clé de jeton d'authentification en provenance du serveur, et générer et afficher des informations d'affichage conformément au lien de certification et à la première clé de jeton d'authentification (S42), de telle sorte que par balayage des informations d'affichage affichées un terminal mobile obtienne des informations cryptées conformément à la première clé de jeton d'authentification et envoie un message de demande d'accès comportant le lien de certification et les informations cryptées au serveur (S43) ; le serveur étant configuré pour recevoir le message de demande d'accès et envoyer les informations cryptées à la page Web (S44) ;
la page Web étant configurée pour acquérir les informations cryptées, et obtenir une seconde clé de jeton d'authentification conformément aux informations cryptées ; et
la page Web étant configurée pour envoyer un message de liaison réussie au serveur après la détermination que la seconde clé de jeton d'authentification est cohérente avec la première clé de jeton d'authentification (S45), et le serveur étant configuré pour lier la première clé de jeton d'authentification au compte (S46).

4. Système selon la revendication 3, dans lequel:
le terminal mobile est configuré pour obtenir les informations cryptées en exécutant une opération de hachage conformément à la première clé de jeton d'authentification et au compte, ou obtenir les informations cryptées en exécutant une opération de hachage conformément à une estampille temporelle, à la première clé de jeton d'authentification et au compte.
